# EUROPEAN PATENT APPLICATION

(11) **EP 1 919 156 A1**
(43) Date of publication of application: **07.05.2008**
(21) Application number: 06291717.4
(22) Date of filing: 06.11.2006
(51) Int. Cl.: H04L 29/06

(54) **Optimized EAP-SIM authentication**

(71) Applicant: Axalto S.A., 92190 Meudon (FR)
(72) Inventor: Nachef, Armand Axalto S.A., 92190 Meudon (FR)

(57) **Abstract**

The invention relates to a method for a server (S) to authenticate a user, the user being connected to the server (S) from a personal computer (PC) through an IP network (IPN), the user having a mobile phone (MP) equipped with a SIM (SIM), the SIM (SIM) comprising means for authenticating the user to a mobile network server (MNS) through the mobile phone (MP), the mobile network server (MNS) being connected to the server (S) through a network (N), the method comprising authenticating the user to the mobile network server (MNS) on behalf of the server (S) using an EAP-SIM protocol. During the authentication of the user by the server (S), the server (S) and the SIM (SIM) communicate together:
• via the mobile network server (MNS), using up to three messages between the SIM (SIM) and the mobile network server (MNS), and
• via the personal computer (PC), using SIM information input by the user into the personal computer (PC), the SIM information being displayed to the user by the SIM (SIM) on the mobile phone (MP).

This avoids the need for a direct connection between the mobile phone (MP) and the personal computer (PC).

## Description

The invention relates to an optimized method for a server to authenticate a user with an EAP-SIM protocol, the user connecting to the server from a personal computer. The invention also relates to a system implementing this method.

It has long been known in the art that for a server to authenticate a user connecting to it from a personal computer, it is possible to use a password. But using no more than a password is very weak, in particular because the password may be intercepted and replayed.

It is also known to rely on cryptographic material (e.g. a key specific to the user) stored inside the personal computer for authenticating the user. But this is very complex, in particular when the user connects to the server from a third party personal computer (e.g. from a friend's home, from a Cybercafé, etc.), or when the user connects for the first time to a previously unknown server. Indeed, the personal computer needs to be loaded with cryptographic material in a secure manner prior to the authentication, while this cryptographic material loading represents a challenge almost as complex as the authentication itself, if not more.

Therefore in a more elaborate known method, it has been proposed to authenticate the user through his SIM, since most people have a mobile phone with a SIM. This is done by establishing a communication between the SIM and the personal computer. This known method is much more secure than the previous ones because it makes use of the authentication of the SIM by the user's mobile network operator, which is a strong authentication performed with tamper resistant devices. It also permits using a single password (e.g. the PIN code of the SIM) instead of membering plenty of passwords (one per server or service provider).

This known method does not require loading any key material inside the personal computer, which is not necessarily a trusted environment.

This known method typically relies on the EAP-SIM protocol. EAP stands for Extensible Authentication Protocol. There are many EAP protocols. In all EAP protocols, there are three tiers:
- the supplicant (or peer), i.e. the user
- the authenticator
- the authentication server

EAP-SIM is a subset of the EAP protocols in which a SIM is used. It was standardized in RFC4186. In EAP-SIM, the supplicant functions are shared between two entities (a mobile phone and a SIM). Two EAP-SIM supplicant implementations have been standardized:
- EAP on UICC standardized by 3GPP/ETSI where most of the supplicant functions are implemented in the SIM
- WLAN-SIM standardized by the WLAN Smart Card Consortium where the supplicant security functions are on the SIM and some functions known as the parsing functions are in the mobile phone

In this known method, the server does not necessarily know the mobile network operator to which the user has subscribed, and in case the user is roaming, the user does not even connect to his own mobile network operator, but to a partner operator. In order to solve the problem of authenticating a user to a first entity (e.g. a partner operator) on behalf of a second entity (e.g. the operator of the user), a consortium known as Liberty Alliance (or Project Liberty) has developed suites of specifications defining federated identity management and web services communication protocols. The initial Project Liberty specifications were for Federated Single sign-on based on SAML. Liberty Alliance specified Identity Providers (IdPs). An IdP may be used to authenticate a user for multiple service providers. An alliance known as the SIM Strong Alliance (www.simstrong.org) has -defined and implemented a framework based on Liberty Alliance where a mobile network operator plays the role of an Identity Provider. This known method makes use of this framework.

Unfortunately, in this known method, establishing the above communication between the SIM and the personal computer requires mobile phones having the capability to communicate with the personal computer (e.g. IRDA communication, BlueTooth, USB connection, serial connection etc.). This also requires configuring the personal computer. This potentially requires installing some drivers and software on the computer (the software and drivers being different for different personal computers such as MAC, Windows PCs, UNIX workstations etc.). In some instances this requires carrying a data cable (e.g. USB cable) as not all computers have a contact-less interface compliant with the one of the mobile phone of the user (e.g. IRDA, BlueTooth, etc.), if any. Many old mobile phones cannot be connected to the personal computer.

The method for a server to authenticate a user according to claim 1 overcomes the above problems. In particular, the mobile phone doesn't have to be connected to the personal computer (i.e. the method works well even with mobile phones which are not connectable to a personal computer). No installation (no additional driver, no additional software etc.) is needed, and no configuration of the personal computer is needed either.

The mobile network server may comprise in particular an OTA (OverTheAir) server, an IdP server (e.g. according to the framework defined by the SIM Strong Alliance), an AAA (Authentication, Authorization, Accounting) server, and/or an authenticator servlet. Examples of AAA servers comprise RADIUS servers, DIAMETER servers, TACACS and TACACS+ servers, etc. Any standard AAA server supporting the EAP-SIM protocol is usable for the invention (normally there is no need to modify it). The OTA server may act as a gateway and forward messages in a standard manner, as instructed by other components of the system. Therefore any standard OTA server is typically usable without modification inside the mobile network server for the purpose of the invention. The mobile phone may act as a "pass-through", in the sense that it does not need to participate in the authentication protocol other than by sending and receiving data on behalf of other entities, in a standard manner. Consequently, there is no need to install specific software on the mobile phone for the invention to work. In other words, the invention may work with almost any mobile phone without modification, for example it may work with all GSM mobile phones, which all support basic SIM toolkit commands (to the knowledge of the applicant).

The invention and its advantages will be explained more in details in the following specification referring to the appended drawings, in which:

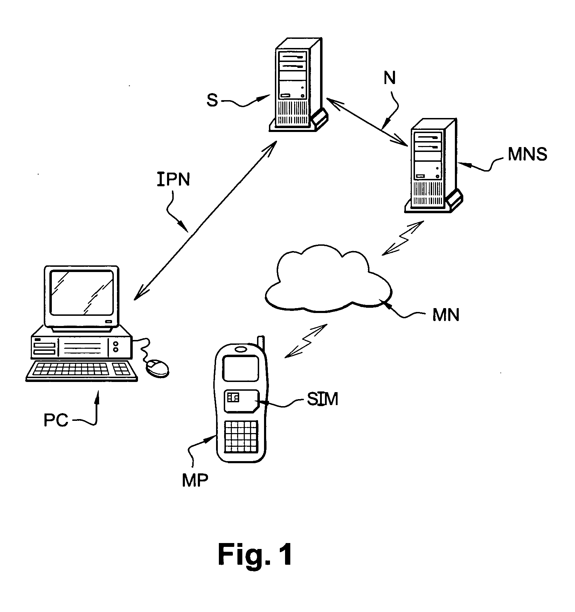

Figure 1 shows a possible architecture of a system for which a method according to the invention is advantageous,
Figure 2 shows the messages exchanged in a conventional EAP-SIM protocol between the supplicant and the authenticator, and between the authenticator and the authentication server,

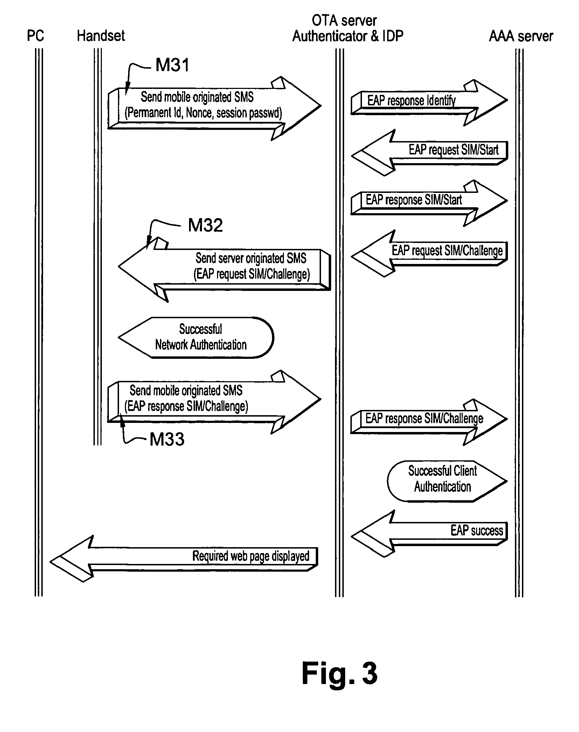

Figure 3 shows the messages exchanged in a method according to a first preferred embodiment between the SIM and the mobile network server in case of successful authentication,

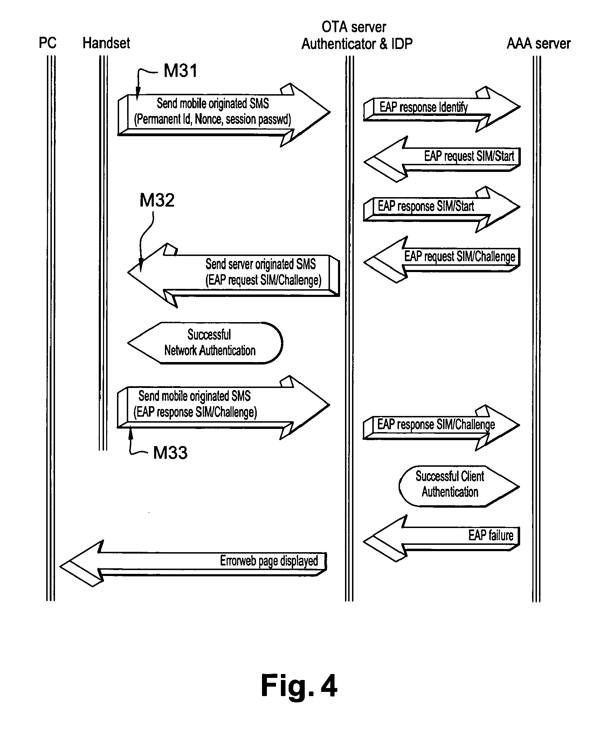

Figure 4 shows the messages exchanged in a method according to a first preferred embodiment between the SIM and the mobile network server in case of failed authentication, and

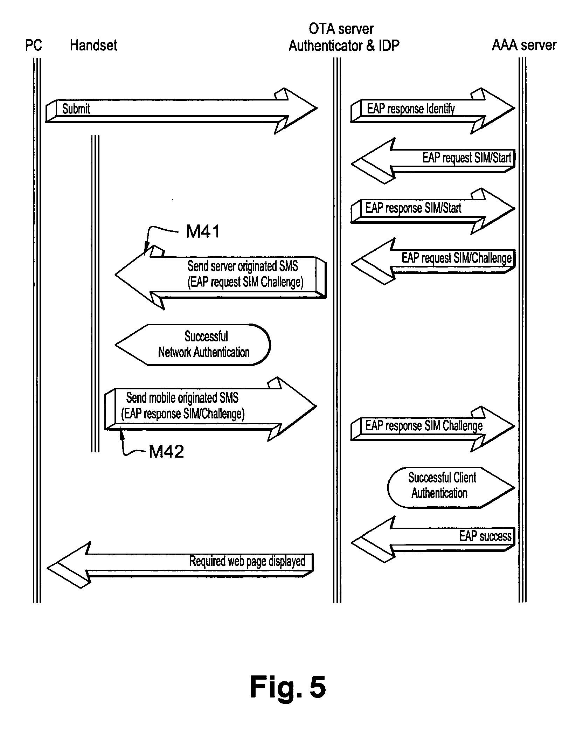

Figure 5 shows the messages exchanged in a method according to a second preferred embodiment between the SIM and the mobile network server in case of successful authentication.

In the method according to claim 1, the user is connected to the server S from a personal computer PC through an IP network IPN. In other words, both the personal computer PC and the server S understand IP, which is the acronym for Internet Protocol. The server S may be a web server proposing services to the user, for example online hotel booking, flight reservation, purchase of goods, access to private areas such as a repository of pictures stored by the user on the web server, etc.

As known in the art, lP may be encapsulated in different types of underlying protocols (WiFi, Ethernet, ADSL, etc.) therefore there may be multiple underlying protocols between the personal computer PC and the server S. For example the personal computer PC may be connected to a USB WiFi card (USB is the underlying protocol between the personal computer PC and the USB WiFi card) which communicates with a WiFi access point using a WiFi protocol. The WiFi access point may be connected to a home router through an Ethernet connection, the home router being connected to an internet service provider (ISP) server through a cable or ADSL connection, the ISP server establishing a connection with the server S through a number of routers and underlying protocols such as satellite and optical fiber protocols.

The personal computer PC may be a desktop computer, a laptop computer, a PDA, etc. The personal computer PC may belong to the user or to a third party. For example, assuming the user is a student, the personal computer PC can be:
- a desktop computer of the student's parents, connected via ADSL in the family's home
- a Windows laptop belonging to the student, connected to a WiFi hotspot of the university
- a UNIX terminal of the university
- a WiFi smart phone belonging to a friend of the student
- a Cybercafé computer connected to the Internet via a cable connection
- etc.

The user has a mobile phone MP equipped with a SIM. The mobile phone MP may be a cell phone such as a GSM/GPRS/UMTS cell phone, a PDA with mobile telephony capability, etc. All GSM mobile phones now support elementary SIM toolkit commands such as "Display Text" and "Get Inkey" and SIM toolkit SMS envelopes.

SIM stands for Subscriber Identity Module. A SIM is a device which comprises means for authenticating a user to a mobile network server MNS through a mobile phone MP. A SIM typically consists of a smart card, however other form factors are possible (MMC cards, device with USB connector, etc.). The acronym SIM is taken in a broad meaning, i.e. USIM and RUIM cards are examples of SIMs given the above definition.

The user is typically a subscriber of a mobile network operator, i.e. this mobile network operator charges the user for his communications. The SIM is normally provided to the user by this mobile network operator.

The mobile network server MNS is a server which may belong to this mobile network operator. However, in general there are roaming agreements between operators. Therefore when traveling abroad, the user may connect through a network MN belonging to another operator, who might act on behalf of the user's mobile network operator for the purpose of authenticating the user to the server S (for example via an Identity Provider). The mobile network server MNS may consist of a single hardware server, or of several hardware servers (either similar redundant servers, or different servers, or different sets of similar redundant servers) which are interconnected. Several servers of the mobile network server MNS may be either in the same room or in different locations (e.g. different countries). The mobile network server MNS may comprise several software servers, all of them running either on a single hardware server, or on separate hardware servers which are interconnected.

The server S is connected to the mobile network server MNS through a network N (for example an IP network). Therefore, the mobile network server MNS and the server S may communicate. For example the successful authentication of the SIM by the mobile network server MNS can be notified to the server S. The mobile network server and the server normally authenticate each other with known techniques prior to communicating one with the other.

The method according to claim 1 comprises authenticating the user to the mobile network server MNS on behalf of the server S using an EAP-SIM protocol. The mobile network server MNS implements both the authenticator and the authentication server features of the EAP-SIM standard. Those two features can reside on one or more distinct sub servers.

During the authentication of the user by the server S, the server S and the SIM communicate together:
a. via the mobile network server MNS, using up to three messages between the SIM and the mobile network server MNS, and
b. via the personal computer PC, using SIM information input by the user into the personal computer PC, the SIM information being displayed to the user by the SIM on the mobile phone MP.

This avoids the need for a direct connection between the mobile phone MP and the personal computer PC. This is extremely advantageous for the reasons stated earlier (no need to configure the personal computer PC, no need for a cable, etc.).

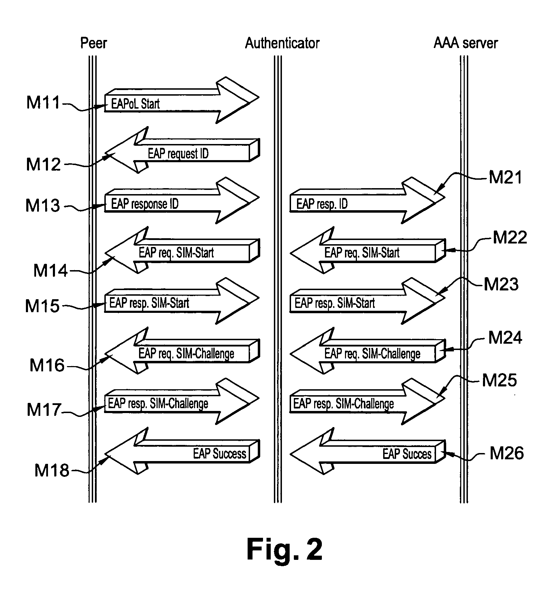

It should be noted that normally, in the EAP-SIM protocol, there are 8 messages between the supplicant and the authenticator. As seen on Figure 2, the 8 messages are (in chronological order):
- "EAPOL start" (M11, from supplicant to authenticator)
- "EAP request ID" (M12, from authenticator to supplicant)
- "EAP response ID" (M13, from supplicant to authenticator)
- "EAP request SIM start" (M14, from authenticator to supplicant)
- "EAP response SIM start" (M15, from supplicant to authenticator)
- "EAP request SIM challenge" (M16, from authenticator to supplicant)
- "EAP response SIM challenge" (M17, from supplicant to authenticator)
- "EAP success" (M18, from authenticator to supplicant)

The method according to the invention reduces the number of messages exchanged between the SIM and the mobile network server MNS by using no more than three messages. This is advantageous because it reduces the duration of the authentication, since messages are often transmitted with a delay. In addition, this reduces the costs for the user when messages are charged by the mobile network operator. Reducing the number of messages is achieved by removing certain messages and by merging useful messages together, when applicable. Two embodiments illustrating this reduction of number of messages are explained below.

In a first preferred embodiment of the method, the method comprises the following steps:
a. the user being connected to the server S from the personal computer PC, the server S requests an identifier from the user,
   For example, the user may be in a Cybercafé, and may be connected to a web site hosted by the server S. The web site may provide services such as online book purchase. The user may have connected by typing the URL of the web site into the web browser of a personal computer PC of the Cybercafé (or by clicking on a link pointing to the web site from a web page). In another example, the server S may be an Internet Service Provider server (e.g. WiFi hotspot), access to Internet being granted only after authentication of the user. Before granting access to the services offered by the server S, a web page may display a text prompting for an identifier, and a text box for typing the identifier. The displayed text may instruct the user to select an EAP-SIM applet on the SIM.
b. upon user request, the mobile phone MP instructs the SIM to generate an identifier,
   This step may for example consist in the user selecting an EAP-SIM applet on the SIM, via the mobile phone MP.
c. the SIM generates an identifier,
   This may be done, for example, by an EAP-SIM applet installed in the SIM. The EAP-SIM applet may require the user to enter a PIN code for increased security. This may be either the PIN code of the SIM (most SIMs have a PIN code, which can sometimes be deactivated), or a specific PIN code just for the EAP-SIM applet (which may be convenient e.g. in order to have a PIN even when the user deactivates the PIN of the SIM or shares the PIN of the SIM with family members). The identifier may for example consist of an EAP-SIM ID concatenated with a nonce (the nonce may be for example a random value generated by the SIM), and with a session ID.
d. the SIM instructs the mobile phone MP to display the identifier, For example the EAP-SIM applet may display the identifier on the screen of the mobile phone MP with a SIM toolkit command. The EAP-SIM applet may also display a text asking the user to enter the displayed identifier in the browser of the personal computer PC. Alternatively, it is possible to display only part of the identifier (e.g. the session ID) if not all the identifier needs to be transmitted from the personal computer PC. For example, part of the identifier may be used only between the SIM and the mobile network server MNS and may not need to be transmitted through the personal computer PC (only the part which has to be sent through the personal computer PC really needs to be displayed).
e. the SIM sends a first message M31 containing the identifier to the mobile network server MNS,
   This message replaces the five first messages M11, M12, M13, M14 and M15 of a "regular" EAP-SIM implementation. Indeed, the first message M31 initiates the authentication like the "EAPOL start" message (M11) would do. It automatically supplies an identifier, which avoids the identifier being requested ("EAP request ID", message M12) and supplied ("EAP response ID", message M13), and it may automatically supply as part of the identifier the information normally requested by the "EAP request SIM start" message (M14) and provided by the "EAP response SIM start" message (M15). Sending the message M31 may consist in sending an SMS-Submit to an OTA server included in the mobile network server MNS. The OTA server may play the role of a simple gateway, and forward the message to an Authenticator servlet running in the mobile network server MNS. The authenticator servlet may then initiate an EAP authentication by building and sending the "EAP-response Identity" message (M21) of the EAP-SIM standard to an AAA server, the AAA server being part of the mobile network server MNS. The AAA server may then send an "EAP request SIM start" message (M22) to the authenticator servlet. The authenticator servlet may build the "EAP response SIM start" message (M23) using part of the identifier received in the first message M31 (e.g. the nonce value). The AAA server may then send an "EAP request SIM challenge" message (M24), containing a challenge, i.e. a random number generated by the AAA server, to the authenticator servlet. The above described exchanges of messages between the AAA server and the authenticator servlet are preferably conducted according to the EAP-SIM standard and occur internally (i.e. between different components or sub servers of the mobile network server MNS).
f. the mobile network server MNS sends a second message M32 containing a signature of the identifier, and a random value, to the SIM,
   This second message M32 correspond to the sixth message M16 ("EAP request SIM challenge") of the EAP-SIM standard. This second message M32 may be for example an SMS sent through the OTA server by the authenticator servlet. The random value is preferably the challenge sent by the AAA server inside the "EAP request SIM challenge" message (M24). The signature may consist of a MAC operation performed on the identifier (or on the part of the identifier which was sent, if only a subset of the identifier is sent).
g. the SIM verifies that the signature of the identifier is correct, The signature of the identifier is used by the SIM in order to authenticate the mobile network server MNS. Indeed, the mobile network server MNS being typically under direct or indirect control of a mobile network operator who issued the SIM, it is easy to share a secret between the SIM and the mobile network server MNS, and therefore the SIM can check the signature of the identifier, the signature being computed with such secret. In addition, the random value and the signature of the identifier can be concatenated and encrypted with a secret key between the SIM and the mobile network server MNS. This gives the SIM the guarantee that it is the same legitimate entity (which received the identifier) that generated and sent the random value. At that stage, it is possible to have the SIM display a text (e.g. via a SIM toolkit command) informing-the user that a legitimate mobile network server MNS received the identifier. The SIM may also display the URL of the server (authenticated by the mobile network server) in order that the user can check that it is the same as the URL he typed. If the signature is incorrect, then the whole authentication method may halt, and the user may be notified of the failure.
h. the SIM sends a third message M33 containing a signature of the random value to the mobile network server MNS,
   This may consist in the EAP-SIM applet sending an SMS-Submit containing the "EAP response SIM challenge" message (M17) to the OTA server. The OTA server may send the "EAP response SIM challenge" message (M25) to the authenticator servlet, which may forward it to the AAA server.
i. the mobile network server verifies that the signature of the random value is correct,
   It may be an AAA server that verifies that the signature of the random value is correct, according to the EAP-SIM protocol. If the signature is correct, then the SIM and the mobile network server MNS are mutually authenticated. However the user and the mobile network server MNS are not mutually authenticated until the user is notified of the success of the authentication. In the context of the invention, it is typically not mandatory to notify the user, i.e. it is in general sufficient to achieve an authentication of the user by the mobile network server MNS. In case of failed signature verification by the mobile network server MNS, the authentication method should halt, and the user may be notified of the failure. In many cases, the failure notification to the user is not mandatory, as it can be inferred by the user from the lack of service delivery (and the success may in general be inferred from the service delivery). Even the EAP-SIM applet does not typically need to be informed about the EAP success or failure. Not informing the SIM is advantageous in order to limit the number of messages to a minimum. This avoids the last "EAP success" message (M26 and more particularly M18) of the EAP-SIM standard. In case the signature verification succeeds, the AAA server may inform the authenticator servlet that may inform an IdP server of the success of the authentication. In this specific case, the IdP server may be used to allow multiple service providers to rely on the mobile network server MNS authentication.
j. the user types the identifier into the personal computer PC,
k. the personal computer PC sends the identifier to the server S,
l. the server S sends the identifier to the mobile network server MNS, In case there are several mobile network servers, this is typically achieved thanks to an IdP server serving as an entry point for all mobile network operators. The IdP server may be in one mobile network server MNS, or it may be external to all mobile network servers MNS and communicate with all of them.
m. the mobile network server MNS matches the identifier received from the SIM with the identifier received from the server S,
   If there are several mobile network servers MNS and one external IdP server, this step may be achieved by the IdP server querying all mobile network servers MNS for the identifier (or subset of the identifier, if only a subset is used). Each mobile network server MNS receives the identifier and compares it with all pending identifiers received from SIMs currently connected with that mobile network server MNS for the purpose of a server S authentication. It may be preferred to perform the mutual authentication of the SIM and the mobile network server only after successful match of the identifier, in particular if this mutual authentication is CPU intensive and may advantageously be avoided (when there is no match), or if the illegitimate triggering of authentication mechanisms should be prevented (e.g. in order to avoid certain attacks on the authentication). In such cases, step f may occur after step m. But in general this is not mandatory.
n. the mobile network server (MNS) informs the server (S) of the successful match and successful authentication,
   If there is no match or if the mutual authentication of the mobile network server and the SIM fails (whichever occurs first), the authentication method halts, and the user may be notified through the SIM (this is not mandatory). It should be noted that in general it is more important to notify a failure than to notify a success, although in specific situations this is not true. In case of success, the success may be notified to the server S through the IdP server. The-web page requested by the user may then be displayed and the service delivered. In case of failure, an error web page can be displayed in the web browser, however this is not as secure as notifying the user through the SIM.
   The order of the above steps does not have to be followed strictly. It is sufficient that step c occurs after step b, steps d and e occur after step c, step f occurs after step e, step g occurs after step f, step h occurs after step g, step i occurs after step h, step j occurs after steps a and d, step k occurs after step j, step I occurs after step k, step m occurs after steps e and I, and step n occurs after step i and m.
   This method is advantageous because it makes it possible to safeguard the privacy of the user. Indeed, the server S only sees an identifier which does not have to contain the identity of the user, but knows that this user is trusted, which in many instances is sufficient.

In a second preferred embodiment, only two messages are used. This is advantageous as it renders the authentication method even faster, however it requires informing the server S of the identity of the user, or at least of some part of the identity of the user (e.g. mobile phone number).

In this second embodiment of the method, the following steps are necessary:
a. the user being connected to the server S from the personal computer PC, the server S requests an identifier from the user, wherein the identifier comprises a nonce and a mobile phone number associated with the SIM of the user,
   For example, the user may be in a Cybercafé, and may be connected to a web site hosted by the server S. The web site may provide services such as online book purchase. The user may have connected by typing the URL of the web site into the web browser of a computer PC of the Cybercafé (or by clicking on a link pointing to the web site from a web page). In another example, the server S may be an Internet Service. Provider server (e.g. WiFi hotspot), access to internet being granted only after authentication of the user. Before granting access to the services offered by the server S, a web page may display a text prompting for a nonce and phone number, and a text box for typing the nonce and phone number. The displayed text may instruct the user to activate an EAP-SIM applet on the SIM in order to obtain the nonce. The nonce is typically a random number.
b. upon user request, the mobile phone MP instructs the SIM to generate a nonce,
   This step may for example consist in the user selecting an EAP-SIM applet on the SIM, via the mobile phone MP.
c. the SIM generates a nonce,
   This may be done, for example, by an EAP-SIM applet installed in the SIM. The EAP-SIM applet may require the user to enter a PIN code for increased security. This may be either the PIN code of the SIM (most SIMs have a PIN code, which can sometimes be deactivated), or a specific PIN code just for the EAP-SIM applet (which may be convenient e.g. in order to have a PIN even when the user deactivates the PIN of the SIM or shares the PIN of the SIM with family members).
d. the SIM instructs the mobile phone MP to display the nonce,
   For example the EAP-SIM applet may display the nonce on the screen of the mobile phone MP with a SIM toolkit command. Optionally, the EAP-SIM applet may also display an EAP-SIM identity and/or a text asking the user to enter the displayed nonce in the browser of the personal computer PC. The nonce can be used as an EAP-SIM nonce and at the same time as a session identifier (e.g. playing the role of an EAP-SIM identity). There can be an optional timer, managed by the EAP-SIM applet, for limiting the time validity of the nonce.
e. the user types the identifier into the personal computer,
   This may comprise typing the nonce and the mobile phone number. The user normally knows his phone number by heart therefore in general there is no need to display it on the mobile phone MP, but the option may be available. Optionally it may also comprise typing a session ID if one (distinct from the nonce) was displayed on-the mobile phone MP. The phone number corresponds to the MSISDN in a GSM environment.
f. the personal computer PC sends the identifier to the server S,
g. the server S sends the identifier to the mobile network server MNS,
   This step is easier to achieve than the equivalent step in the first embodiment (step I) since the mobile network server MNS can be inferred from the mobile phone number. In case the EAP-SIM identity is not sent at all, and in case the method is used in a GSM environment, the authenticator servlet may have to retrieve the IMSI and realm (which together may define an EAP-SIM identity) based on the MSISDN. This may require accessing the HLR (home location register). The EAP Permanent Id is then typically equal to "1|IMSI|realm".
h. the mobile network server MNS sends a first message M41 containing a signature of the nonce and a random value to the SIM,
   This first message M41 correspond to the sixth message M16 ("EAP request SIM challenge") of the EAP-SIM standard. The first five messages M11, M12, M13, M14 and M15 can be exchanged between the personal computer PC and the mobile network server MNS via the server S. Indeed the user has provided the personal computer PC with relevant information during step e. It is possible to use less than five messages, but in general this is not mandatory as typically delays are shorter on IP networks than on messaging channels of mobile networks. This first message M41 may be an SMS sent through an OTA server by an authenticator servlet, both the OTA server and the authenticator servlet being components of the mobile network server MNS. The random value is preferably a challenge sent by an AAA server (which is a possible component of the mobile network server MNS) inside the "EAP request SIM challenge" message (M24). The signature may consist of a MAC operation performed on the nonce.
i. the SIM verifies that the signature of the nonce is correct,
   The signature of the nonce is used by the SIM in order to authenticate the mobile network server MNS. Indeed, the mobile network server MNS being under direct or indirect control of a mobile network operator who issued the SIM, it is easy to share a secret between the SIM and the mobile network server MNS and therefore the SIM can check the signature of the nonce, the signature being computed with such secret. In addition, the random value and the signature of the nonce can be concatenated and encrypted with a secret key between the SIM and the mobile network server MNS. This gives the SIM the guarantee that it is the same legitimate entity (which received the nonce) that generated and sent the random value. At that stage, it is possible to have the SIM display a text (e.g. via a SIM toolkit command) informing the user that a legitimate mobile network server MNS received the nonce. If the signature is incorrect, then the whole authentication method may halt, and the user may be notified of the failure.
j. the SIM sends a second message M42 containing a signature of the random value to the mobile network server MNS,
   This may consist in the EAP-SIM applet sending an SMS-Submit containing the "EAP response SIM challenge" message (M17) to the OTA server. The OTA server may send the "EAP response SIM challenge" message (M17) to the authenticator servlet, which may forward it to the AAA server (message M25).
k. the mobile network server MNS verifies that the signature of the random value is correct, and informs the server S of the successful verification,
   It may be an AAA server that verifies that the signature of the random value is correct, according to the EAP-SIM protocol. If the signature is correct, then the SIM and the mobile network server MNS are mutually authenticated. However the user and the mobile network server MNS are not mutually authenticated until the user is notified of the success of the authentication. In the context of the invention, it is typically not mandatory to notify the user, i.e. it is in general sufficient to achieve an authentication of the user by the mobile network server MNS. In case of failed signature verification by the mobile network server MNS, the authentication method should halt, and the user may be notified of the failure. In many cases, the failure notification to the user is not mandatory, as it can be inferred by the user from the lack of service delivery (and the success may in general be inferred from the service delivery). Even the EAP-SIM applet does not typically need to be informed about the EAP success or failure. Not informing the SIM is advantageous in order to limit the number of messages to a minimum. This avoids the last "EAP success" message of the EAP-SIM standard (M26, M18). In case the signature verification succeeds, the AAA server may inform the authenticator servlet that may inform an IdP server of the success of the authentication. In this specific case, the IdP server may be used to allow multiple service providers to rely on the mobile network server MNS authentication. The IdP server may redirect the user to the desired web page upon successful authentication, for example with an HTTP 301 mechanism.
   The order of the above steps does not have to be followed strictly. It is sufficient that step c occurs after step b, step d occurs after step c, step e occurs after steps a and d, step f occurs after step e, step g occurs after step f, step h occurs after step g, step i occurs after step h, step j occurs after step i, and step k occurs after step j.

It should be noted that this second preferred embodiment may be susceptible to attacks by programs known as "spam bots", which may overload the mobile network server MNS (in particular components such as the OTA server and SMS-C which can constitute parts of the mobile network server in a GSM environment) with requests containing wrong phone numbers. In order to defeat such attacks, it is possible to use a technique known as CAPTCHA. According to Wikipedia, CAPTCHA stands for "Completely Automated Public Turing test to tell Computers and Humans Apart", and is a Carnegie Mellon University trademark. It is a type of challenge-response test used in computing to determine whether or not the user is human. A common type of CAPTCHA requires that the user type the letters of a distorted image, sometimes with the addition of an obscured sequence of letters or digits that appears on the screen. This type of CAPTCHA may be implemented just before the user submits his phone number.

The invention also concerns a method for mutually authenticating a user and a server S, wherein the user is authenticated to the server S with a method according to the first and second preferred embodiments above. In this method, after the mobile network server MNS has mutually authenticated with the SIM and with the server, the mobile network server MNS sends an additional message M18 containing a confirmation of the server authentication to the SIM. The SIM instructs the mobile phone MP to display the confirmation message. This method is advantageous as it performs a mutual authentication (the user can be reassured), but it costs one more message (i.e. three or four messages in total), therefore it is typically only to be used in specific applications in which the user needs (or may desire) to have this level of confidence.

In preferred embodiments, the above methods concern a mobile network MN consisting of GSM, GPRS and/or UMTS networks, and the messages are SMS messages.

The invention also relates to a system comprising a SIM, a mobile phone MP, a mobile network server MNS, a server S and a personal computer PC, the system being characterized in that it is set to authenticate a user holding the SIM to the server S according to one of the above described methods.

## Claims

1. Method for a server (S) to authenticate a user, the user being connected to the server (S) from a personal computer (PC) through an IP network (IPN), the user having a mobile phone (MP) equipped with a SIM (SIM), the SIM (SIM) comprising means for authenticating the user to a mobile network server (MNS) through the mobile phone (MP), the mobile network server (MNS) being connected to the server (S) through a network (N), the method comprising authenticating the user to the mobile network server (MNS) on behalf of the server (S) using an EAP-SIM protocol, the method being **characterized in that** during the authentication of the user by the server (S), the server (S) and the SIM (SIM) communicate together:
a. via the mobile network server (MNS), using up to three messages between the SIM (SIM) and the mobile network server (MNS), and
b. via the personal computer (PC), using SIM information input by the user into the personal computer (PC), the SIM information being displayed to the user by the SIM (SIM) on the mobile phone (MP), thereby avoiding the need for a direct connection between the mobile phone (MP) and the personal computer (PC).

2. Method according to claim 1, comprising the following steps:
a. the user being connected to the server (S) from the personal computer (PC), the server (S) requests an identifier from the user,
b. upon user request, the mobile phone (MP) instructs the SIM (SIM) to generate an identifier,
c. the SIM (SIM) generates an identifier,
d. the SIM (SIM) instructs the mobile phone (MP) to display the identifier,
e. the SIM (SIM) sends a first message (M31) containing the identifier - to the mobile network server (MNS),
f. the mobile network server (MNS) sends a second message (M32) containing a signature of the identifier, and a random value, to the SIM (SIM),
g. the SIM (SIM) verifies that the signature of the identifier is correct,
h. the SIM (SIM) sends a third message (M33) containing a signature of the random value to the mobile network server (MNS),
i. the mobile network server (MNS) verifies that the signature of the random value is correct,
j. the user types the identifier into the personal computer (PC),
k. the personal computer (PC) sends the identifier to the server (S),
l. the server (S) sends the identifier to the mobile network server (MNS),
m. the mobile network server (MNS) matches the identifier received from the SIM (SIM) with the identifier received from the server (S),
n. the mobile network server (MNS) informs the server (S) of the successful match and successful authentication,
wherein step c occurs after step b, steps d and e occur after step c, step f occurs after step e, step g occurs after step f, step h occurs after step g, step i occurs after step h, step j occurs after steps a and d, step k occurs after step j, step I occurs after step k, step m occurs after steps e and I, and step n occurs after step i and m.

3. Method according to claim 1, comprising the following steps:
a. the user being connected to the server (S) from the personal computer (PC), the server (S) requests an identifier from the user, wherein the identifier comprises a nonce and a mobile phone number associated with the SIM (SIM) of the user,
b. upon user request, the mobile phone (MP) instructs the SIM (SIM) to generate a nonce,
c. the SIM (SIM) generates a nonce,
d. the SIM (SIM) instructs the mobile phone (MP) to display the nonce,
e. the user types the identifier into the personal computer (PC),
f. the personal computer (PC) sends the identifier to the server (S),
g. the server (S) sends the identifier to the mobile network server (MNS),
h. the mobile network server (MNS) sends a first message (M41) containing a signature of the nonce and a random value to the SIM (SIM),
i. the SIM (SIM) verifies that the signature of the nonce is correct,
j. the SIM (SIM) sends a second message (M42) containing a signature of the random value to the mobile network server (MNS),
k. the mobile network server (MNS) verifies that the signature of the random value is correct, and informs the server (S) of the successful verification,
wherein step c occurs after step b, step d occurs after step c, step e occurs after steps a and d, step f occurs after step e, step g occurs after step f, step h occurs after step g, step i occurs after step h, step j occurs after step i, and step k occurs after step j.

4. Method for mutually authenticating a user and a server (S), wherein the user is authenticated to the server (S) with a method according to claims 2 or 3, and wherein after the mobile network server (MNS) has mutually authenticated with the SIM (SIM) and with the server (S), the mobile network server (MNS) sends an additional message (M18) containing a confirmation of the server authentication to the SIM (SIM), and wherein the SIM (SIM) instructs the mobile phone (MP) to display the confirmation message.

5. Method according to any previous claim, wherein the mobile network (MN) is a GSM, GPRS or UMTS network, and wherein the messages (M31, M32, M33, M41, M42, M18) are SMS messages.

6. Method according to any previous claim, wherein the mobile network server (MNS) comprises several servers, such as an authenticator servlet, an AAA server, an IdP server and/or an OTA server.

7. System comprising a SIM (SIM), a mobile phone (MP), a mobile network server (MNS), a server (S) and a personal computer (PC), the system being **characterized in that** it is set to authenticate a user holding the SIM (SIM) to the server (S) according to a method according to any previous claim.
